(19) Europäisches Patentamt
European Patent Office
Office européen des brevets

(11) EP 0 807 648 B1

(12) EUROPÄISCHE PATENTSCHRIFT

(45) Veröffentlichungstag und Bekanntmachung des Hinweises auf die Patenterteilung:
**08.12.1999 Patentblatt 1999/49**

(51) Int Cl.[6]: **C08G 18/08**, C08G 18/67, C09D 175/14

(21) Anmeldenummer: **97107492.7**

(22) Anmeldetag: **07.05.1997**

# (54) Latent vernetzende wässerige Polyurethandispersionen

Latent curing aqueous polyurethane dispersions

Dispersions aqueuses de polyuréthane de réticulation latent

(84) Benannte Vertragsstaaten:
**BE CH DE ES FR GB IT LI NL**

(30) Priorität: **15.05.1996 DE 19619636**

(43) Veröffentlichungstag der Anmeldung:
**19.11.1997 Patentblatt 1997/47**

(73) Patentinhaber: **BASF AKTIENGESELLSCHAFT
67056 Ludwigshafen (DE)**

(72) Erfinder:
- **Licht, Ulrike, Dr.
68163 Mannheim (DE)**
- **Kokel, Nicolas, Dr.
67069 Ludwigshafen (DE)**
- **Häberle, Karl, Dr.
67346 Speyer (DE)**
- **Angel, Maximilian, Dr.
67105 Schifferstadt (DE)**
- **Weyland, Peter, Dr.
67227 Frankenthal (DE)**
- **Scherr, Günter, Dr.
67065 Ludwigshafen (DE)**

(56) Entgegenhaltungen:

| | |
|---|---|
| **EP-A- 0 183 119** | **EP-A- 0 184 302** |
| **EP-A- 0 443 537** | **EP-A- 0 704 469** |
| **EP-A- 0 794 204** | **US-A- 5 306 764** |

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die vorliegende Erfindung betrifft latent vernetzende wässerige Polyurethandispersionen, enthaltend

1. Latent vernetzende wässerige Polyurethandispersionen, enthaltend

   I) eine disperse Phase (P.I), enthaltend

      Ia) ein Polyurethan (PUR.Ia), das neben Gruppen, die die Wasserdispergierbarkeit des Polyurethans bewirken, Gruppen mit einer C-C-Doppelbindung, in denen die Doppelbindung durch eine daran direkt gebundene Carbonylgruppe aktiviert ist, trägt oder

      Ib) eine Mischung aus

      - einem Polyurethan (PUR.Ib), das Gruppen, die die Wasserdispergierbarkeit des Polyurethans bewirken, jedoch keine Gruppen mit einer C-C-Doppelbindung, in denen die Doppelbindung durch eine daran direkt gebundene Carbonylgruppe aktiviert ist, trägt und

      - einer Verbindung (V.I) verschieden von den Polyurethanen PUR.Ia und PUR.Ib, die Gruppen mit einer C-C-Doppelbindung, in denen die Doppelbindung durch eine daran direkt gebundene Carbonylgruppe aktiviert ist, trägt und

   II) eine Verbindung, die

   - im Mittel mindestens 2 H-Atome, die als Aminofunktion vorliegen

   - eine Wasserlöslichkeit von mehr als lg/l (25°C) und

   - zahlenmittleres Molgewicht ($M_n$) von 200 bis 1 000 000 aufweist (Verbindung II)

Weiterhin betrifft die Erfindung deren Verwendung als Beschichtungsmittel oder Klebstoff.

Wässerige Dispersionen, die in dispergierter Form ein Polyurethan enthalten, sind allgemein bekannt. Damit Beschichtungen, die aus dem Polyurethan hergestellt werden, besonders gute mechanische Eigenschaften, setzt man diesen Dispersionen einen Vernetzerkomponente zu. Dabei ist es besonders erwünscht, daß der Vernetzer den Molekulargewichtsaufbau des Polyurethans erst bewirkt, wenn die Polyurethandispersion nach dem Auftrag auf das zu beschichtende Werkstück bereits verfilmt ist. Unter diesen Umständen erhält man Filme, die eine besonders hohe Kohäsion aufweisen, da dann auch die Polymermoleküle eines Dispersionsteilchens mit den Polymermolekülen eines anderen benachbarten Dispersionsteilchen über eine kovalente Bindung verknüpft sein können.

Eine besonders gute Kohäsion der Filme ist beispielsweise auf dem Klebstoffgebiet besonders dann erforderlich, wenn der Klebeverbund unter Einwirkung von Wärme mechanisch belastet wird.

Um Klebeverbunde zu erhalten, die auch unter diesen Bedingungen noch eine ausreichende Festigkeit aufweisen, wurde z. B. in der EP-A-206059 empfohlen, den Dispersionen kurze Zeit vor deren Verarbeitung als Klebstoff als Vernetzer ein wasseremulgierbares Polyisocyanat zuzusetzen.

Der Nachteil an diesen Zweikomponenten-Systemen besteht jedoch darin, daß die Topfzeit, d.h. der Zeitraum, in dem diese Systeme nach ihrer Vermischung verarbeitet werden können, eng begrenzt ist. Da das Zweikomponenten-System nicht über einen längeren Zeitraum hinweg lagerbar ist und der Verarbeiter sich ein bestimmte Klebstoffmenge, die er innerhalb eines Arbeitszyklus verarbeiten kann, extra herstellen muß, ist der Arbeitsaufwand für den Verarbeiter der Klebstoffe bei Zweikomponenten-Systemen gegenüber Einkomponenten-Systemen erhöht.

Über einen längeren Zeitraum hinweg lagerbare, latent härtende Dispersionen, d.h. solche Dispersionen, die zwar den Härter enthalten, wobei aber der Härter erst nach der Verarbeitung der Dispersionen vollständig wirksam wird, sind beispielsweise aus der EP-A-442 652 bekannt. Die Dispersionen enthalten beispielsweise ein Polyurethan mit einer Carbonylgruppe in Aldehyd- oder Ketofunktion und Adipinsäuredihydrazid als Vernetzungsmittel. Diese Dispersionen jedoch im Hinblick auf Festigkeit bei erhöhter Temperatur verbesserungsbedürftig.

Aus der EP-A-443 537 sind wässerige Dispersionen aus Polyurethanen bekannt, die Acryloylgruppen tragen. Es wird empfohlen, diese Dispersionen zur Folienkaschierung zu verwenden. Dabei werden die Dispersion auf eine Folie aufgetragen, die Folie auf ein anderes Substrat geklebt und der Klebstoff durch Bestrahlung mit UV-Licht ausgehärtet.

Weiterhin sind Polyurethandispersionen mit Acryloylgruppen aus der EP-A-443 537, 183 119, 181 486, 189

945 sowie der 353 797 bekannt.

Aus der EP-419 945 ist die Vernetzung von in Wasser dispergiertem NCO-terminiertem Polyurethanpräpolymeren mit Pentaethylenhexamin bekannt, unter Bildung von Harnstoffgruppen.

In der nicht vorveröffentlichten deutschen Patentanmeldung Aktenzeichen 1960 86 10.8 sind Dispersionen bekannt, die in separaten Phasen Polyurethan, das C-C'-Doppelbindungen, die auf Carbonylgruppen aktiviert sind trägt oder Mischungen eines Polyurethans mit einem anderen Polymer, das derartige Gruppen trägt (Phase I) und ein in Wasser schwerlöslichen Polyamin (Phase II), enthält.

Die Aufgabe der vorliegenden Erfindung bestand daher darin, eine weitere latent härtende wässerige Polyurethandispersion zur Verfügung zu stellen, die die Nachteile des Standes der Technik nicht aufweist und insbesondere eine gute Lagerstabilität aufweist und mit denen sich wärmefeste Verklebungen herstellen lassen.

Demgemäß wurden die eingangs definierten wässerigen Dispersionen gefunden.

Die disperse Phase (P.Ia) enthält üblicherweise 0,05 bis 3, bevorzugt 0,2 bis 1 mol/kg Gruppen mit einer C-C-Doppelbindung, in denen die Doppelbindung durch eine daran direkt gebundene Carbonylgruppe aktiviert ist.

Die Phase (P.I) enthält bevorzugt oder besteht besonders bevorzugt aus einem Polyurethan (PUR.Ia), aufgebaut aus

a1) mehrwertigen Isocyanaten mit 4 bis 30 C-Atomen,

a2) Polyolen, von denen

a2.1) 10 bis 100 mol-%, bezogen auf die Gesamtmenge der Polyole (a2), ein Molekulargewicht von 500 bis 5000 aufweisen, und

a2.2) 0 bis 90 mol-%, bezogen auf die Gesamtmenge der Polyole (a2), ein Molekulargewicht von 60 bis 50 g/mol aufweisen,

a3) von den Monomeren (a1) und (a2) verschiedene Monomere mit wenigstens einer Isocyanatgruppe oder wenigstens einer gegenüber Isocyanatgruppen reaktiven Gruppe, die darüberhinaus wenigstens eine hydrophile Gruppen oder eine potentiell hydrophile Gruppe tragen, wodurch die Wasserdispergierbarkeit der Polyurethane bewirkt wird,

a4) von den Monomeren (a1), (a2) und (a3) verschiedene Monomere mit wenigstens einer Isocyanatgruppe oder wenigstens einer gegenüber Isocyanatgruppen reaktiven Gruppe, die darüberhinaus wenigstens eine Gruppe mit einer C-C-Doppelbindung, in denen die Doppelbindung durch eine daran direkt gebundene Carbonylgruppe aktiviert ist, tragen,

a5) gegebenenfalls weiteren von den Monomeren (a2) bis (a4) verschiedenen mehrwertigen Verbindungen mit gegenüber Isocyanat-gruppen reaktiven Gruppen, bei denen es sich um alkoholische Hydroxylgruppen oder primäre oder sekundäre Aminogruppen handelt.

Als Monomere (al) kommen die üblicherweise in der Polyurethanchemie eingesetzten Polyisocyanate in Betracht.

Insbesondere zu nennen sind Diisocyanate $X(NCO)_2$, wobei X für einen aliphatischen Kohlenwasserstoffrest mit 4 bis 12 Kohlenstoffatomen, einen cycloaliphatischen oder aromatischen Kohlenwasserstoffrest mit 6 bis 15 Kohlenstoffatomen oder einen araliphatischen Kohlenwasserstoffrest mit 7 bis 15 Kohlenstoffatomen steht. Beispiele derartiger Diisocyanate sind Tetramethylendiisocyanat, Hexamethylendiisocyanat, Dodecamethylendiisocyanat, 1,4-Diisocyanatocyclohexan, 1-Isocyanato-3,5,5-trimethyl-5-isocyanatomethylcyclohexan (IPDI), 2,2-Bis-(4-isocyanatocyclohexyl)-propan, Trimethylhexandiisocyanat, 1,4-Diisocyanatobenzol, 2,4'-Diisocyanatotoluol, 2,6-Diisocyanatotoluol, 4,4'-Diisocyanato-diphenylmethan, 2,4-Diisocyanato-diphenylmethan, p-Xylylendiisocyanat, die Isomeren des Bis-(4-isocyanatocyclohexyl)methan wie das trans/trans-, das cis/cis- und das cis/ trans-Isomere sowie aus diesen Verbindungen bestehende Gemische.

Als Gemische dieser Isocyanate sind besonders die Mischungen der jeweiligen Strukturisomeren von Diisocyanatotoluol und Diisocyanato-diphenylmethan von Bedeutung, insbesondere die Mischung aus 80 mol-% 2,4 Diisocyanatotoluol und 20 mol-% 2,6-Diisocyanatotoluol geeignet. Weiterhin sind die Mischungen von aromatischen Isocyanaten wie 2,4 Diisocyanatotoluol und/oder 2,6-Diisocyanatotoluol mit aliphatischen oder cycloaliphatischen Isocyanaten wie Hexamethylendiisocyanat oder IPDI besonders vorteilhaft, wobei das bevorzugte Mischungsverhältnis der aliphatischen zu aromatischen Isocyanate 4 : 1 bis 1 : 4 beträgt.

Als Verbindungen (al) kann man auch Isocyanate einsetzen, die neben den freien Isocyanatgruppen weitere

verkappte Isocyanat-gruppen, z.B. Uretdion- oder Carbodiimidgruppen tragen.

Gegebenenfalls können auch solche Isocyanate mitverwendet werden, die nur eine Isocyanatgruppe tragen. Im allgemeinen beträgt ihr Anteil maximal 10 mol-%, bezogen auf die gesamte Molmenge der Monomere. Die Monoisocyanate tragen üblicherweise weitere funktionelle Gruppen wie olefinische Gruppen oder Carbonylgruppen und dienen zur Einführung von funktionellen Gruppen in das Polyurethan, die die Dispergierung bzw. die Vernetzung oder weitere polymeranaloge Umsetzung des Polyurethans ermöglichen. In Betracht kommen hierfür Monomere wie Isopropenyl-$\alpha,\alpha$-dimethylbenzylisocyanat (TMI).

Um Polyurethane mit einem gewissen Verzweigungs- oder Vernetzungsgrad herzustellen, können z.B. dreiwertige und vierwertige Isocyante eingesetzt werden. Derartige Isocyanate werden z.B. erhalten, indem man zweiwertige Isocyanate miteinander umsetzt, indem man einen Teil ihrer Isocyanatgruppen zu Allophanat- oder Isocyanurat-Gruppen derivatisiert. Handelsübliche Verbindungen sind beispielsweise das Isocyanurat oder das Biuret des Hexamethylendiisocyanats.

Im Hinblick auf gute Filmbildung und Elastizität kommen als Polyole (a2) vornehmlich höhermolekulare Polyole (a2.1), bevorzugt Diole in Betracht, die ein Molekulargewicht von etwa 500 bis 5000, vorzugsweise von etwa 100 bis 3000 g/mol haben.

Bei den Diolen (a2.1) handelt es sich insbesondere um Polyesterpolyole, die z.B. aus Ullmanns Encyklopädie der technischen Chemie, 4. Auflage, Band 19, S. 62 bis 65 bekannt sind. Bevorzugt werden Polyesterpolyole eingesetzt, die durch Umsetzung von zweiwertigen Alkoholen mit zweiwertigen Carbonsäuren erhalten werden. Anstelle der freien Polycarbonsäuren können auch die entsprechenden Polycarbonsäureanhydride oder entsprechende Polycarbonsäureester von niederen Alkoholen oder deren Gemische zur Herstellung der Polyesterpolyole verwendet werden. Die Polycarbonsäuren können aliphatisch, cycloaliphatisch, araliphatisch, aromatisch oder heterocyclisch sein und gegebenenfalls, z.B. durch Halogenatome, substituiert und/oder ungesättigt sein. Als Beispiele hierfür seien genannt: Korksäure, Azelainsäure, Phthalsäure, Isophthalsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid, Fumarsäure, dimere Fettsäuren. Bevorzugt sind Dicarbonsäuren der allgemeinen Formel $HOOC-(CH_2)_y-COOH$, wobei y eine Zahl von 1 bis 20, bevorzugt eine gerade Zahl von 2 bis 20 ist, z.B. Bernsteinsäure, Adipinsäure, Dodecandicarbonsäure und Sebacinsäure.

Als mehrwertige Alkohole kommen z.B. Ethylenglykol, Propan-1,2-diol, Propan-1,3-diol, Butan-1,3-diol, Buten-1,4-diol, Butin1,4-diol, Pentan-1,5-diol, Neopentylglykol, Bis-(hydroxymethyl)-cyclohexane wie 1,4-Bis-(hydroxymethyl)cyclohexan, 2-Methyl-propan-1,3-diol, Methylpentandiole, ferner Diethylenglykol, Triethylenglykol, Tetraethylenglykol, Polyethylenglykol, Dipropylenglykol, Polypropylenglykol, Dibutylenglykol und Polybutylenglykole in Betracht. Bevorzugt sind Alkohole der allgemeinen Formel $HO-(CH_2)_x-OH$, wobei x eine Zahl von 1 bis 20, bevorzugt eine gerade Zahl von 2 bis 20 ist. Beispiele hierfür sind Ethylenglycol, Butan-1,4-diol, Hexan-1,6-diol, Octan-1,8-diol und Dodecan-1,12- diol.

Ferner kommen auch Polycarbonat-Diole, wie sie z.B. durch Umsetzung von Phosgen mit einem Überschuß von den als Aufbaukomponenten für die Polyesterpolyole genannten niedermolekularen Alkohole erhalten werden können, in Betracht.

Geeignet sind auch Polyesterdiole auf Lacton-Basis, wobei es sich um Homo- oder Mischpolymerisate von Lactonen, bevorzugt um endständige Hydroxylgruppen aufweisende Anlagerungsprodukte von Lactonen an geeignete difunktionelle Startermoleküle handelt. Als Lactone kommen bevorzugt solche in Betracht, die sich von Verbindungen der allgemeinen Formel $HO-(CH_2)_z-COOH$ ableiten, wobei z eine Zahl von 1 bis 20 ist. Beispiele sind $\varepsilon$-Caprolacton, $\beta$-Propiolacton, gamma-Butyrolacton und/oder Methyl-$\varepsilon$-caprolacton sowie deren Gemische. Geeignete Starterkomponenten sind z.B. die vorstehend als Aufbaukomponente für die Polyesterpolyole genannten niedermolekularen zweiwertigen Alkohole. Die entsprechenden Polymerisate des epsilon-Caprolactons sind besonders bevorzugt. Auch niedere Polyesterdiole oder Polyetherdiole können als Starter zur Herstellung der Lacton-Polymerisate eingesetzt sein. Anstelle der Polymerisate von Lactonen können auch die entsprechenden, chemisch äquivalenten Polykondensate der den Lactonen entsprechenden Hydroxycarbonsäuren, eingesetzt werden.

Daneben kommen als Monomere (a2.1) Polyetherdiole in Betracht. Sie sind insbesondere durch Polymerisation von Ethylenoxid, Propylenoxid, Butylenoxid, Tetrahydrofuran, Styroloxid oder Epichlorhydrin mit sich selbst, z. B. in Gegenwart von $BF_3$ oder durch Anlagerung dieser Verbindungen gegebenenfalls im Gemisch oder nacheinander, an Startkomponenten mit reaktionsfähigen Wasserstoffatomen, wie Alkohole oder Amine, z.B. Wasser, Ethylenglykol, Propan-1,2-diol, Propan-1,3-diol, 1,2-Bis(4-hydroxydiphenyl)-propan oder Anilin erhältlich. Besonders bevorzugt ist Polytetrahydrofuran eines Molekulargewichts von 240 bis 5000, und vor allem 500 bis 4500.

Ebenfalls geeignet sind Polyhydroxyolefine, bevorzugt solche mit 2 endständigen Hydroxylgruppen, z.B. $\alpha$-$\Omega$-Dihydroxypolybutadien, $\alpha$-$\Omega$-Dihydroxypolymethacrylester oder $\alpha$-$\Omega$-DihydroxyPolyacrylester als Monomere (a2.1). Solche Verbindungen sind beispielsweise aus er EP-A-0 622 378 bekannt. Weitere geeignete Polyole sind Polyacetale, Polysiloxane und Alkydharze.

Die Polyole können auch als Gemische im Verhältnis 0,1 : 1 bis 1 : 9 eingesetzt werden.

Die Härte und der Elastizitätsmodul der Polyurethane läßt sich erhöhen, wenn als Diole (a2) neben den Diolen (a2.1) noch niedermolekulare Diole (a2.2) mit einem Molekulargewicht von etwa 62 bis 500, vorzugsweise von 62 bis 200 g/mol, eingesetzt werden. Als Monomere (a2.2) werden vor allem die Aufbaukomponenten der für die Herstellung von Polyesterpolyolen genannten kurzkettigen Alkandiole eingesetzt, wobei die unverzweigten Diole mit 2 bis 12C-Atomen und einer gradzahligen Anzahl von C-Atomen bevorzugt werden.

Bevorzugt beträgt der Anteil der Diole (a2.1), bezogen auf die Gesamtmenge der der Diolen (a2) 10 bis 100 mol-% und der Anteil der Monomere (a2.2), bezogen auf die Gesamtmenge der der Diolen (a2) 0 bis 90 mol-%. eingesetzt. Besonders bevorzugt beträgt das Verhältnis der Diole (a2.1) zu den Monomeren (a2.2) 0,2 : 1 bis 5 : 1, besonders bevorzugt 0,5 : 1 bis 2 : 1.

Um die Wasserdispergierbarkeit der Polyurethane zu erreichen, sind die Polyurethane neben den Komponenten (a1) und (a2) aus von den Komponenten (a1) und (a2) verschiedenen Monomeren (a3), die wenigstens eine Isocyanatgruppe oder wenigstens eine gegenüber Isocyanatgruppen reaktive Gruppe und darüberhinaus wenigstens eine hydrophile Gruppe oder eine Gruppe, die sich in hydrophile Gruppen überführen läßt, tragen, aufgebaut. Im folgenden Text wird der Begriff "hydrophile Gruppen oder potentiell hydrophile Gruppen" mit "(potentiell) hydrophile Gruppen" abgekürzt. Die (potentiell) hydrophilen Gruppen reagieren mit Isocyanaten wesentlich langsamer, als die funktionellen Gruppen der Monomere, die zum Aufbau der Polymerhauptkette dienen.

Der Anteil der Komponenten mit (potentiell) hydrophilen Gruppen 5 an der Gesamtmenge der Komponenten (a1) bis (a5) wird im allgemeinen so bemessen, daß die Molmenge der (potentiell) hydrophilen Gruppen, bezogen auf die Gewichtsmenge aller Monomere (a1) bis (a5), 0,03 bis 1, bevorzugt 0,05 bis 0,5 und besonders bevorzugt 0,08 bis 0,3 mol/kg beträgt.

Bei den (potentiell) hydrophilen Gruppen kann es sich um nichtionische oder bevorzugt um (potentiell) ionische hydrophile Gruppen handeln.

Als nichtionische hydrophile Gruppen kommen insbesondere Polyethylenglycolether aus vorzugsweise 5 bis 100, bevorzugt 10 bis 80 Ethylenoxid-Wiederholungseinheiten, in Betracht. Der Gehalt an Polyethylenoxid-Einheiten beträgt im allgemeinen 0 bis 10, bevorzugt 0 bis 6 Gew.-%, bezogen auf die Gewichtsmenge aller Monomere (a1) bis (a5).

Bevorzugte Monomere mit nichtionischen hydrophilen Gruppen sind das Polyethylenglykol und Diisocyanate, die eine endständig veretherten Polyethylenglykolrest tragen. Derartige Diisocyanate sowie Verfahren zu deren Herstellung sind in den Patentschriften US 3 905 929 und US 3 920 598 angegeben.

Ionische hydrophile Gruppen sind vor allem anionische Gruppen wie die Sulfonat-, die Carboxylat- und die Phosphatgruppe in Form ihrer Alkalimetall- oder Ammoniumsalze sowie kationische Gruppen wie Ammonium-Gruppen, insbesondere protonierte tertiäre Aminogruppen oder quartäre Ammoniumgruppen.

Potentiell ionische hydrophile Gruppen sind vor allem solche, die sich durch einfache Neutralisations-, Hydrolyse- oder Quaternisierungsreaktionen in die oben genannten ionischen hydrophilen Gruppen überführen lassen, also z.B. Carbonsäuregruppen, Anhydridgruppen oder tertiäre Aminogruppen.

(Potentiell) ionische Monomere (a3) sind z.B. in Ullmanns Encyklopädie der technischen Chemie, 4. Auflage, Band 19, S. 311-313 und beispielsweise in der DE-A 1 495 745 ausführlich beschrieben.

Als (potentiell) kationische Monomere (a3) sind vor allem Monomere mit tertiären Aminogruppen von besonderer praktischer Bedeutung, beispielsweise: Tris-(hydroxyalkyl)-amine, N,N'-Bis(hydroxyalkyl)-alkylamine, N-Hydroxyalkyl-dialkylamine, Tris-(aminoalkyl)-amine, N,N'-Bis(aminoalkyl)-alkylamine, N-Aminoalkyl-dialkylamine, wobei die Alkylreste und Alkandiyl-Einheiten dieser tertiären Amine unabhängig voneinander aus 2 bis 6 Kohlenstoffatomen bestehen. Weiterhin kommen tertiäre Stickstoffatome aufweisende Polyether mit vorzugsweise zwei endständigen Hydroxylgruppen, wie sie z.B. durch Alkoxylierung von zwei an Aminstickstoff gebundene Wasserstoffatome aufweisende Amine, z.B. Methylamin, Anilin, oder N,N'-Dimethylhydrazin, in an sich üblicher Weise zugänglich sind, in Betracht. Derartige Polyether weisen im allgemeinen ein zwischen 500 und 6000 g/mol liegendes Molgewicht auf.

Diese tertiären Amine werden entweder mit Säuren, bevorzugt starken Mineralsäuren wie Phosphorsäure, Schwefelsäure oder Halogenwasserstoffsäuren oder starken organischen Säuren oder durch Umsetzung mit geeigneten Quaternisierungsmitteln wie $C_1$- bis $C_6$-Alkylhalogeniden, z.B. Bromiden oder Chloriden in die Ammoniumsalze überführt.

Als Monomere mit (potentiell) anionischen Gruppen werden üblicherweise aliphatische, cycloaliphatische, araliphatische oder aromatische Carbonsäuren und Sulfonsäuren in Betracht, die mindestens eine alkoholische Hydroxylgruppe oder mindestens eine primäre oder sekundäre Aminogruppe tragen. Bevorzugt sind Dihydroxyalkylcarbonsäuren, vor allem mit 3 bis 10 Kohlenstoffatomen, wie sie auch in der US-A 3 412 054 beschrieben sind. Insbesondere sind Verbindungen der allgemeinen Formel

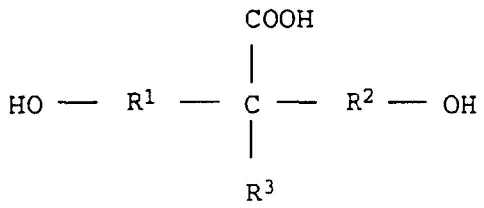

in welcher $R^1$ und $R^2$ für eine $C_1$- bis $C_4$-Alkandiyl-Einheit und $R^3$ für eine $C_1$- bis $C_4$-Alkyl-Einheit steht und vor allem Dimethylolpropionsäure (DMPA) bevorzugt.

Weiterhin eignen sich entsprechende Dihydroxysulfonsäuren und Dihydroxyphosphonsäuren wie 2,3-Dihydroxypropanphosphonsäure.

Ansonsten geeignet sind Dihydroxylverbindungen mit einem Molekulargewicht über 500 bis 10000 g/mol mit mindestens 2 Carboxylatgruppen, die aus der DE-A 3 911 827 bekannt sind. Sie sind durch Umsetzung von Dihydroxylverbindungen mit Tetracarbonsäuredianhydriden wie Pyromellitsäuredianhydrid oder Cyclopentantetracarbonsäuredianhydrid im Molverhältnis 2 : 1 bis 1,05 : 1 in einer Polyadditionsreaktion erhältlich. Als Dihydroxylverbindungen sind insbesondere die als Kettenverlängerer aufgeführten Monomere (a2.2) sowie die Diole (a2.1) geeignet.

Als Monomere (a3) mit gegenüber Isocyanaten reaktiven Aminogruppen kommen Aminocarbonsäuren wie Lysin, β-Alanin, die in der DE-A 2 034 479 genannten Addukte von aliphatischen diprimären Diaminen an α,β-ungesättigte Carbonsäuren wie die N-(2-Aminoethyl)-2-aminoethancarbonsäure sowie die entsprechenden N-Aminoalkylaminoalkylcarbonsäuren, wobei die Alkandiyl-Einheiten aus 2 bis 6 Kohlenstoffatome bestehen, in Betracht.

Sofern Monomere mit potentiell ionische Gruppen eingesetzt werden, kann deren Überführung in die ionische Form vor, während, jedoch vorzugsweise nach der Isocyanat-Polyaddition erfolgen, da sich die ionischen Monomeren in der Reaktionsmischung häufig nur schwer lösen. Besonders bevorzugt liegen die Carboxylatgruppen in Form ihrer Salze mit einem Alkaliion oder einem Ammoniumion als Gegenion vor.

Als Monomere von den Monomeren (a2) und (a3) verschiedene Monomere (a4) kommen vor allem Verbindungen mit einer, bevorzugt 2 alkoholischen Hydroxylgruppen wie ($C_1$- bis $C_6$-Hydroxyalkyl)-acrylate, z.B. Hydroxyethylacrylat und Hydroxypropylacrylat, ein ($C_1$- bis $C_6$-Hydroxyalkyl)-methacrylat, Mono- oder Diester von Acrylsäure oder Methacrylsäure und Trimethylolpropan oder Glycerin oder um das Bisaddukt von Acrylsäure und/oder Methacrylsäure an ein Bisepoxid wie Bisphenol® A und Bisphenol F in Betracht.

Weiterhin ist das Addukt aus Acryl- oder Methacrylsäure und Butandioldiglycidylether besonders geeignet.

Weiterhin kommen als Monomere (a4) übliche Polyesterpolyole in Betracht, die zumindest teilweise aus Maleinsäure und Fumarsäure aufgebaut sind. Ansonsten sind diese Polyester genauso aufgebaut wie die Polyester, die als Monomere (a2.2) in Betracht kommen.

Die gegebenenfalls als Aufbaukomponenten eingesetzten Monomere (a5), die von den Monomeren (a2) bis (a4) verschieden sind, dienen im allgemeinen der Vernetzung oder der Kettenverlängerung. Es sind im allgemeinen mehr als zweiwertige nicht-aromatische Alkohole, Amine mit 2 oder mehr primären und/oder sekundären Aminogruppen sowie Verbindungen, die neben einer oder mehreren alkoholischen Hyxdroxylgruppen eine oder mehrere primäre und/oder sekundären Aminogruppen tragen.

Alkohole mit einer höheren Wertigkeit als 2, die zur Einstellung eines gewissen Verzweigungs- oder Vernetzungsgrades dienen können, sind z.B. Trimethylolpropan, Glycerin oder Zucker.

Ferner kommen Monoalkohole in Betracht, die neben der Hydroxyl-Gruppe eine weitere gegenüber Isocyanaten reaktive Gruppe tragen wie Monoalkohole mit einer oder mehreren primären und/oder sekundären Aminogruppen, z.B. Monoethanolamin.

Polyamine mit 2 oder mehr primären und/oder sekundären Aminogruppen werden vor allem dann eingesetzt, wenn die Kettenverlängerung bzw. Vernetzung in Gegenwart von Wasser stattfinden soll, da Amine in der Regel schneller als Alkohole oder Wasser mit Isocyanaten reagieren. Das ist häufig dann erforderlich, wenn wässerige Dispersionen von vernetzten Polyurethanen oder Polyurethanen mit hohem Molgewicht gewünscht werden. In solchen Fällen geht man so vor, daß man Präpolymere mit Isocyanatgruppen herstellt, diese rasch in Wasser dispergiert und anschließend durch Zugabe von Verbindungen mit mehreren gegenüber Isocyanaten reaktiven Aminogruppen kettenverlängert oder vernetzt.

Hierzu geeignete Amine sind im allgemeinen polyfunktionelle Amine des Molgewichtsbereiches von 32 bis 500 g/mol, vorzugsweise von 60 bis 300 g/mol, welche mindestens zwei primäre, zwei sekundäre oder eine primäre und eine sekundäre Aminogruppe enthalten. Beispiele hierfür sind Diamine wie Diaminoethan, Diaminopropane, Diaminobutane, Diaminohexane, Piperazin, 2,5-Dimethylpiperazin, Amino-3-aminomethyl-3,5,5-trimethyl-cyclohexan (Isophorondiamin, IPDA), 4,4'-Diaminodicyclohexylmethan, 1,4-Diaminocyclohexan, Aminoethylethanolamin, Hydrazin, Hydrazinhydrat oder Triamine wie Diethylentriamin oder 1,8-Diamino-4-aminomethyloctan.

Die Amine können auch in blockierter Form, z.B. in Form der entsprechenden Ketimine (siehe z.B. CA-1 129 128), Ketazine (vgl. z.B. die US-A 4 269 748) oder Aminsalze (s. US-A 4 292 226) eingesetzt werden. Auch Oxazolidine, wie sie beispielsweise in der US-A 4 192 937 verwendet werden, stellen verkappte Polyamine dar, die für die Herstellung der erfindungsgemäßen Polyurethane zur Kettenverlängerung der Präpolymeren eingesetzt werden können. Bei der Verwendung derartiger verkappter Polyamine werden diese im allgemeinen mit den Präpolymeren in Abwesenheit von Wasser vermischt und diese Mischung anschließend mit dem Dispersionswasser oder einem Teil des Dispersionswassers vermischt, so daß hydrolytisch die entsprechenden Polyamine freigesetzt werden.

Bevorzugt werden Gemische von Di- und Triaminen verwendet, besonders bevorzugt Gemische von Isophorondiamin und Diethylentriamin.

Die Polyurethane enthalten bevorzugt kein Polyamin oder 1 bis 10, besonders bevorzugt 4 bis 8 mol-%, bezogen auf die Gesamtmenge der Komponente (a2) bis (a4) eines Polyamins mit mindestens 2 gegenüber Isocyanaten reaktiven Aminogruppen als Monomere (a5).

Es empfiehlt sich, Verbindungen mit primären oder sekundären Aminogruppen nur in solchen Mengen einzusetzen, daß die Gesamtmenge der zum Zeitpunkt der Zugabe vorhandenen Isocyanatgruppen größer ist als die der primären oder sekundären Aminogruppen. Unter diesen Umständen läßt sich vermeiden, daß ein größerer Anteil der Aminogruppen nicht mit den Isocyanatgruppen zu Harnstoff sondern mit den Acryloyl- bzw. Methacryloylgruppen abreagiert.

Nach einer ebenfalls bevorzugten Ausführungsform enthält oder besteht die Phase (P.I) aus einer Mischung aus

- einem Polyurethan (PUR.Ib) und
- einem Polyurethan (PUR.Ic) als Verbindung (V.I),

wobei das Polyurethan (PUR.Ib) aufgebaut ist aus

b1) mehrwertigen Isocyanaten mit 4 bis 30 C-Atomen,

b2) Polyolen, von denen

b2.1) 10 bis 100 mol-%, bezogen auf die Gesamtmenge der Diole (b2), ein Molekulargewicht von 500 bis 5000 aufweisen, und

b2.2) 0 bis 90 mol-%, bezogen auf die Gesamtmenge der Diole (b), ein Molekulargewicht von 60 bis 500 g/mol aufweisen,

b3) von den Monomeren (b1) und (b2) verschiedenen Monomeren mit wenigstens einer Isocyanatgruppe oder wenigstens einer gegenüber Isocyanatgruppen reaktiven Gruppe, die darüberhinaus wenigstens eine hydrophile Gruppen oder eine potentiell hydrophile Gruppe tragen, wodurch die Wasserdispergierbarkeit der Polyurethane bewirkt wird,

b4) gegebenenfalls weiteren von den Polyolen (b2) und Monomeren (b3) verschiedenen mehrwertigen Verbindungen mit gegenüber Isocyanaten reaktiven Gruppen, bei denen es sich um alkoholische Hydroxylgruppen oder primäre oder sekundäre Aminogruppen 5 handelt,

und das Polyurethan (PUR.Ic) aufgebaut ist aus

c1) mehrwertigen Isocyanaten mit 4 bis 30 C-Atomen,

c2) Polyolen, von denen

c2.1) 10 bis 100 mol-%, bezogen auf die Gesamtmenge der Diole (c2), ein Molekulargewicht von 500 bis 5000 aufweisen, und

c2.2) 0 bis 90 mol-%, bezogen auf die Gesamtmenge der Diole (c2), ein Molekulargewicht von 60 bis 500 g/mol aufweisen,

c3) von den Monomeren (c1) und (c2) verschiedenen Monomeren mit wenigstens einer Isocyanatgruppe oder wenigstens einer gegenüber Isocyanatgruppen reaktiven Gruppe, die darüber hinaus wenigstens eine Acryloyl- oder Methacryloylgruppe tragen.

Das Mengenverhältnis des Polyurethans (PUR.Ib) zu Verbindung (V.I) beträgt dabei im allgemeinen 0,5 : 1 bis 10 : 1.

Als Monomere (b1), (b2), (b3) und (b4) kommen besonders die entsprechenden Monomere in Betracht, die als Monomere (a1), (a2), (a3) und (a5) bevorzugt sind.

Als Monomere (c1), (c2.1), (c2.2) und (c3) sind besonders die entsprechenden Monomere geeignet, die als Monomere (a1), (a2.1), (a2.2) und (a4) bevorzugt sind.

Bevorzugt werden die Monomere (c3) in solchen Mengen eingesetzt, daß das Polyurethan (PUR.Ic) 0,2 bis 4 mol Gruppen mit einer C-C-Doppelbindung, in denen die Doppelbindung durch eine direkt gebundene Carbonylgruppe aktiviert ist, pro kg Polyurethan (PUR.Ic) enthält.

Als Verbindungen (V.I) kann die disperse Phase (P.I) auch acryloyl- oder methacryloylgruppenhaltige Ester enthalten, wie sie aus der EP-A-447 845, 279 303 oder der 127 766 bekannt sind.

Dabei handelt es sich bevorzugt um Ester, erhältlich durch Umsetzung von

- Polyolen, wie sie als Monomere (a2.1) und (a2.2) beschrieben sind sowie um höhere niedermolekulare Alkohole wie Glycerin, Trimethylolpropan und Pentaerythrol, wobei diese Alkohole gegebenenfalls ethoxyliert oder propoxyliert sind,

- 2- bis 4wertigen $C_3$- bis $C_{36}$-Carbonsäuren, z.B. Adipinsäure und

- Acryl- und/oder Methacrylsäure,

zu einem carbonsäuregruppenhaltigen Polyester, und anschließende Veresterung der Carbonsäuregruppen dieser Ester durch Umsetzung mit äquivalenten Mengen einer Epoxidverbindung.

Geeignet sind vor allem Verbindungen (V.I), die in einem Lösungsmittel, in dem üblicherweise die Herstellung der Polyurethane (PUR.Ia) vorgenommen wird, bei 20°C zu mindestens 5 Gew.-% löslich sind und pro 100 g 0,1 bis 1 mol Gruppen mit einer C-C-Doppelbindung, in denen die Doppelbindung durch eine daran direkt gebundene Carbonylgruppe aktiviert ist, tragen.

Bevorzugt weisen sowohl das Polyurethan (PUR.Ia) als auch die Verbindung (V.I) in Wasser eine Löslichkeit von weniger als 5 g/l, besonders bevorzugt von weniger als 1 g/l auf (gemessen bei 20°C).

Auf dem Gebiet der Polyurethanchemie ist allgemein bekannt, wie das Molekulargewicht der Polyurethane durch Wahl der Anteile der miteinander reaktiven Monomere sowie dem arithmetischen Mittel der Zahl der reaktiven funktionellen Gruppen pro Molekül eingestellt werden kann.

Normalerweise werden die Komponenten (al) bis (a5) bzw. (bl) bis (b4) sowie ihre jeweiligen Molmengen so gewählt, daß das Verhältnis A : B mit

A) der Molmenge an Isocyanatgruppen und

B) der Summe aus der Molmenge der Hydroxylgruppen und der Molmenge der funktionellen Gruppen, die mit Isocyanaten in einer Additionsreaktion reagieren können

0,5 : 1 bis 2 : 1, bevorzugt 0,8 : 1 bis 1,5, besonders bevorzugt 0,9 : 1 bis 1,2 : 1 beträgt. Ganz besonders bevorzugt liegt das Verhältnis A : B möglichst nahe an 1 : 1.

Bevorzugt werden die Monomere (a4) 0,05 bis 3 in solchen Mengen eingesetzt, daß das Polyurethan (PUR. Ia) 50 bis 1000, besonders bevorzugt 0,2 bis 1 mol Gruppen mit einer C-C-Doppelbindung, in denen die Doppelbindung durch eine daran direkt gebundene Carbonylgruppe aktiviert ist, pro kg Polyurethan (PUR.Ia) enthält.

Die erfindungsgemäßen Dispersionen lassen sich auf einfache Weise herstellen, indem man eine Dispersion (D.I), enthaltend in disperser Form ein Polyurethan mit Gruppen mit einer C-C-Doppelbindung, in denen die Doppelbindung durch eine direkt gebundene Carbonylgruppe aktiviert ist, (disperse Phase P.I), wobei diese Dispersion (D.I) jedoch im wesentlichen frei ist von Polyurethanen, die noch Isocyanatgruppen tragen mit einer Verbindung, die

- im Mittel mindestens 2, bevorzugt 5 bis 200, besonders bevorzugt 10 bis 100 H-Atome, die dann als Aminofunktion vorliegen

- eine Wasserlöslichkeit von mehr als 1 g/l bevorzugt von mehr als 10 g/l, besonders bevorzugt von mehr als 100

g/l und

- ein zahlenmittleres Molgewicht ($M_n$) von 200 bis 1000000, bevorzugt von 400 bis 10000 aufweist, vermischt.

Das zahlenmittlere Molgewicht läßt sich beispielsweise aus der gemessenen Aminzahl, deren Bestimmung allgemein bekannt ist (vgl. DIN. 53176), berechnen.

Abgesehen von der Amino-Funktion tragen die Verbindungen II im allgemeinen keine Gruppen, die mit Wasser oder den Polymeren der Phase I reagieren können. Als Verbindungen (II) kommen vor allem Poly-(C2-bis C4)-alkylenoxide in Betracht, die an den Kettenenden Aminogruppen tragen, wobei solche die vorwiegend einen Ethylenoxid und/oder Propylenoxideinheiten aufgeführt sind, bevorzugt werden.

Derartige Amine sind unter dem Handelsnamen Jeffamine® bekannt und beispielsweise in der EP-A-507143 beschrieben.

Dabei handelt es sich beispielsweise um Umsetzungsprodukte aus einem diprimären Polyetherdiamin und pro Mol Polyetherdiamin 2 mol Ethylen-, Propylen- und/oder Butylenoxyd, wobei die Bedingungen für die Umsetzung des Polyetherdiamins mit dem Alkylenoxyd so ausgewählt werden sollen, daß hochselektiv das N,N'-Bis(hydroxyalkylamin)-derivat mit zwei sekundären Aminogruppen entsteht. Beispiele für die Polyetherdiamine sind z.B. 4,7-Dioxadecan-1,10-diamin, 4,11-Dioxatetradecan-1,14-diamin, α-(2-Aminomethyl-ethyl)-ω-(2-aminomethylethoxy)-Polyloxy(methyl-1,2-ethandiyl)] mit einem MG von 200 bis 3000, und α-(3-Aminopropyl)-ω-(3-aminopropoxy)-poly[oxy(1,4-butandiyl)] mit einem MG von 300 bis 3000.

Bevorzugte Verbindungen (II) sind weiterhin verzweigte oder unverzweigte Polyethylenimine und einem von 200 bis 10000. Derartige Verbindungen sind handelsüblich (Polymin® Marken der BASF AG) und beispielsweise in der US 3200081, US 3885069 und der DE-A-19611977 beschrieben.

Die Polyurethane (PUR Ia) oder die Verbindungen (V.I) einerseits und die Verbindungen (II) andererseits sind in dem erfindungsgemäßen wässerigen Dispersionen bevorzugt in solchen Mengenverhältnissen enthalten, daß das Molverhältnis der durch eine Carbonylgruppe aktivierten Doppelbindung zu den Wasserstoffatomen der Verbindung (II), die als Aminogruppe vorliegen 0,1:1 bis 10:1, bevorzugt 2:1 bis 0,5:1 beträgt.

Vor allem sind solche erfindungsgemäßen wässerigen Dispersionen bevorzugt, in denen das Molverhältnis des durch eine Carbonylgruppe aktivierten Doppelbindung zu den sekundären und primären Aminogruppen 2:1 bis 0,5:1 beträgt.

Das Vermischen der Dispersion (DI) mit der Verbindung (II) ist unkritisch und kann beispielsweise erfolgen, indem man sie in die Dispersion einrührt.

Dispersionen (D.I), die ein Polyurethan (PUR.Ia) mit einer C-C-Doppelbindung, in denen die Doppelbindung durch eine direkt gebundene Carbonylgruppe aktiviert ist, z.B. Acryloyl- oder Methacryloylgruppen, tragen, sind allgemein bekannt (vgl. EP-A-443 537, 183 119, 181 486, 189 945 sowie 353 797).

Meistens werden die Dispersionen (D.I) nach einem der folgenden Verfahren hergestellt:

Nach dem "Acetonverfahren" wird in einem mit Wasser mischbaren und bei Normaldruck unter 100°C siedenden Lösungsmittel aus den Komponenten (a1) bis (a5) bzw. (b1) bis (b4) ein wasserdispergierbares Polyurethan hergestellt. Es wird soviel Wasser zugegeben, bis sich eine Dispersion bildet, in der Wasser die kohärente Phase darstellt.

Das "Präpolymer-Mischverfahren" unterscheidet sich vom Acetonverfahren darin, daß nicht ein ausreagiertes (potentiell) wasserdispergierbares Polyurethan, sondern zunächst ein wasserdispergierbares Präpolymer hergestellt wird, das Isocyanat-Gruppen trägt. Die Komponenten (a1) bis (a5) bzw. (b1) bis (b4) werden hierbei so gewählt, daß das definitionsgemäße Verhältnis A : B größer 1,0 bis 3, bevorzugt 1,05 bis 1,5 beträgt. Das Präpolymer wird zuerst in Wasser dispergiert und anschließend gegebenenfalls durch Reaktion der Isocyanat-Gruppen mit Aminen, die mehr als 2 gegenüber Isocyanaten reaktive Aminogruppen tragen, vernetzt oder mit Aminen die 2 gegenüber Isocyanaten reaktive Aminogruppen tragen, kettenverlängert. Eine Kettenverlängerung findet auch dann statt, wenn kein Amin zugesetzt wird. In diesem Fall werden Isocyanatgruppen zu Amingruppen hydrolysiert, die mit noch verbliebenen Isocyanatgruppen der Präpolymere unter Kettenverlängerung abreagieren.

Im Fall des Präpolymeren aus den Monomeren (b1) bis (b4) wird das stöchiometrische Verhältnis der Einsatzstoffe und die Reaktionszeit bevorzugt so gewählt, daß das Präpolymer vor seiner Dispergierung einen Gehalt von weniger als 0,1 Gew.-% NCO-Gruppen pro kg Präpolymer enthält. Es wird dabei von einem Gewicht der NCO-Gruppen von 42 g pro Mol ausgegangen.

Die Polyaddition der Komponenten (a1) bis (a5) bzw. (b1) bis (b4) erfolgt im allgemeinen bei Reaktionstemperaturen von 20 bis 180°C, bevorzugt 50 bis 150°C unter Normaldruck oder unter autogenem Druck.

Die erforderlichen Reaktionszeiten können sich über wenige Minuten bis einige Stunden erstrecken. Es ist auf dem Gebiet der Polyurethanchemie bekannt, wie die Reaktionszeit durch eine Vielzahl von Parametern wie Temperatur, Konzentration der Monomere, Reaktivität der Monomeren beeinflußt wird.

Zur Beschleunigung der Reaktion der Diisocyanate können die üblichen Katalysatoren, wie Dibutylzinndilaurat, Zinn-II-octoat oder Diazabicyclo-(2,2,2)-octan, mitverwendet werden.

Als Polymerisationsapparate kommen Rührkessel in Betracht, insbesondere dann, wenn durch Mitverwendung von Lösungsmitteln für eine niedrige Viskosität und eine gute Wärmeabfuhr gesorgt ist.

Bevorzugte Lösungsmittel sind mit Wasser unbegrenzt mischbar, weisen einen Siedepunkt bei Normaldruck von 40 bis 100°C auf und reagieren nicht oder nur langsam mit den Monomeren.

Die Dispersionen (D.I), die als disperse Phase (P.I) eine Mischung aus dem Polyurethan (PUR.Ib) und der Verbindung (V.I) enthalten, werden zweckmäßigerweise hergestellt, indem man beim Acetonverfahren das noch nicht dispergierte Polyurethan (PUR.Ib) und beim Präpolymer-Mischverfahren das entsprechende Präpolymer mit der Verbindung (V.I) vermischt und diese Mischungen in Wasser dispergiert. Durch diese Art der Codispergierung bildet sich eine disperse Phase, in der das Polyurethan (PUR.Ib) und die Verbindung (V.I) nebeneinander, d.h. beide gemeinsam in einem Teilchen, vorliegen.

Diese Methode der Codispergierung ist beispielsweise in der DE-A-3 903 538, 4 309 079 und 4 0 24 567 am Beispiel von Polymeren, z.B. hydrophoben Hilfsmitteln wie Phenol-Kondensationsharze aus Aldehyden und Phenol bzw. Phenolderivaten oder Epoxidharzen beschrieben.

Üblicherweise wird, falls bei der Herstellung des Polyurethans ein Lösungsmittel mitverwendet wurde, der größte Teil des Lösungsmittels aus der Dispersion entfernt, beispielsweise durch Destillation bei vermindertem Druck. Bevorzugt weisen die Dispersionen einen Lösungsmittelgehalt von weniger als 10 Gew.-% und sind besonders bevorzugt frei von Lösungsmitteln.

Diese hydrophoben Hilfsmittel können ebenfalls in der dispersen Phase (P.I) enthalten sein.

Die Dispersionen (D.I) haben im allgemeinen einen Feststoffgehalt von 10 bis 75, bevorzugt von 20 bis 65 Gew.-% und eine Viskosität von 10 bis 500 mPas (gemessen bei einer Temperatur von 20°C und einer Schergeschwindigkeit von 250 $s^{-1}$).

Die erfindungsgemäßen Polyurethandispersionen können weitere wasseremulgierbare oder -dispergierbare Harze, wie Polymer-, Polyurethane, Polyester-, Epoxyd- oder Alkydharze sowie handelsübliche Hilfs- und Zusatzstoffe wie Treibmittel, Entschäumer, Emulgatoren, Verdickungsmittel und Thixotropiermittel, Farbmittel wie Farbstoffe und Pigmente enthalten.

Sie eignen sich sich beispielsweise zum Verkleben oder Beschichten unterschiedlicher Substrate wie Holz, Metall, Kunststoffen, Papier, Leder oder Textil sowie für die Herstellung von Formkörpern und Druckfarben.

Die Verarbeitung der erfindungsgemäßen Polyurethandispersionen kann dabei nach den in der Klebstoff, Leder- oder Lackindustrie allgemein üblichen Verfahren erfolgen, also indem man die Dispersionen auf das Substrat sprüht walzt oder rakelt und anschließend trocknet.

Für den Fall der Verarbeitung als Klebstoff werden die beschichteten Werkstücke entweder vor dem Trocknen des Dispersionsfilms oder nach dem Trocknen mit einem anderen Werkstück bevorzugt unter Anwendung von Druck zusammengefügt.

Besonders feste Klebstoffverbunde erhält man, wenn man Werkstücke, die mit einem getrockneten Klebstofffilm versehen sind, unmittelbar vor, während oder nach dem Zusammenfügen auf eine Temperatur von ca. 50 bis 100°C erwärmt.

Die nach diesen Methoden hergestellten Klebstoffverbunde zeichnen sich insbesondere dadurch aus, daß sie lagerbeständig sind und sich mit Ihnen Verklebungen mit einer hohen Wärmestandfestigkeit herstellen lassen.

Als Lederbeschichtung eingesetzt, verleihen sie den Ledern eine Oberfläche, die beim Kontakt mit der Haut ein angenehmes ledertypisches Gefühl vermittelt, eine hohe mechanische Beanspruchsbarkeit und gute verarbeitungstechnischen Eigenschaften, z.B. beim Bügeln der beschichteten Leder.

Herstellungsbeispiele:

Die Viskositäten der Dispersionen wurden bei einer Temperatur von 20°C und einer Schergeschwindigkeit von 250s-1 mit einem Rotations-Rheometer mit konzentrischen Zylindern (Spindeldurchmesser 38,7 mm, Becherdurchmesser: 42,0 mm) vermessen.

Die Teilchengröße der Latexpartikel wurde indirekt über Trübungsmessungen bestimmt. Hierzu wurde die Trübung einer Dispersion mit einem Feststoffgehalt von 0,01 Gew.-% relativ zu dest. Wasser bei einer Schichtdicke von 2,5 cm und bei Raumtemperatur bestimmt.

$$LD = \frac{\text{Intensität}_{\text{Disp}}.\text{x } 100}{\text{Intensität}_{\text{Wasser}}}$$

Der K-Wert ist ein Maß für das Molekulargewicht eines Polymers und wurde nach der Methode ermittelt, wie sie in Kirk-Othmer, Encyclopedia of Chemical Technology, 3 rd Edition, Verlag John Wiley & Sons, Inc., Volume 23, S.

967 beschrieben ist.

Die in den nachfolgenden Beispielen verwendeten Symbole haben die nachstehend wiedergegebenen Bedeutungen:

| | |
|---|---|
| OHZ = | Hydroxylzahl |
| TDI = | Toluylendiisocyanat |
| HDI = | Hexamethylendiisocyanat |
| PUD-Salz = | Na-Salz des Michael-Addukts aus Acrylsäure und Ethylendiamin |
| DBTL = | Dibutylzinndilaurat |
| DMPA = | Dimethylolpropionsäure |
| VE-Wasser = | Entiontes Wasser |
| RT = | Raumtemperatur |
| M = | Molekulargewicht |

Beispiel 1(V) (zum Vergleich)

565.5 g eines Polyesters aus Adipinsäure und Butandiol (OHZ=45) wurden mit 0.05g DBTL in 152.2 g Aceton bei 65°C mit 29.6 g TDI 1 h umgesetzt. Es werden 28.6 g HDI zudosiert und weitere 37 min bei 65°C gehalten. Dann mit 609.9 g Aceton verdünnt und auf 50°C wurde abgekühlt, der NCO-Gehalt betrug 0.65 %. Es wurden 40.95 g PUD-Salz zugegeben und nach einigen Minuten 160.0 g eines Adduktes von 2 mol Acrylsäure an 1 mol Bisphenol- A-bisglycidylether in 160 g Aceton homogen eingerührt. Danach wurde mit 1200 g VE-Wasser dispergiert. Nach Zugabe eines Entschäumers wurde das Aceton im Vakuum bei Temperaturen bis 40°C abdestilliert. Die Dispersion wurde auf 40 % Feststoff eingestellt.

Analysenwerte: Feststoffgehalt: 40 % LD: 51.8 % Visk.: 26.4 mPas pH: 8.81 Doppelbindungsgehalt: 0.83 mol/kg

Beispiel 1

Ein Teil der Dispersion wurde mit einer 25%igen wäßrigen Lösung eines Polyethylenimins mit Pn=20 versetzt, so daß gleiche molare Mengen an Doppelbindungen und Aminogruppen vorliegen.
LD: 62 Visk.: 34.1 mPas pH: 9.3
Die Dispersion wurde bei 40°C verfilmt: K-Wert: ungelöst

Beispiel 2 (V) (zum Vergleich)

595.9 g eines Polyesters aus Adipinsäure und Diethylenglykol (OHZ=42) wurden mit 0.1 g DBTL, 50.2 g Butandiol-1,4 und 80.1 g TDI 1 h bei 65°C in 172 g Aceton umgesetzt. Dann wurde 77.4 g HDI zudosiert und noch 1.5 h bei 65°C gerührt. Es wurde mit 688 g Aceton verdünnt und auf 59°C abgekühlt. Der NCO-Gehalt beträgt 0.69 %. nach der Zugabe von 40.95 g PUD-Salz wird einige Minuten gerührt und eine Lösung von 80 g eines Adduktes aus 2 mol Acrylsäure an 1 mol Bisphenol-A-bisglycidylether in 80 g Aceton homogen eingerührt. Dann wurde mit 1200 g VE-Wasser dispergiert. Das Aceton wurde im Vakuum bei Temperaturen bis 40°C abdestilliert und die Dispersion auf 40 % Feststoffgehalt eingestellt.

Analysenwerte: Feststoffgehalt: 40 % LD: 87.2 % Visk.: 121 mPas pH:8 K-Wert: 85 Doppelbindungsgehalt: 0.41 mol/kg

Beispiel 2

Ein Teil der Dispersion wurde mit äquimolaren Mengen Amin in Form eines Polyethylenimins mit Pn=20 als 50%ige Lösung versetzt.
LD: 83.5 Visk.: 76.2 mPas pH: 9.4 K-Wert: 77

Die Dispersion wurde bei 40°C verfilmt. K-Wert:ungelöst.

Beispiel 3 (V) (zum Vergleich)

641.7 g eines Polyesters aus Adipinsäure und Butandiol (OHZ=45) wurde mit 0.03 g DBTL und 31.5 g TDI in 171.7 g Aceton 1 h bei 65°C umgesetzt. Dann wurden 30.4 g HDI zudosiert und weitere 105 min bei 65°C gehalten. Es wurde mit 688.2 g Aceton verdünnt und auf 50°C abgekühlt.

Der NCO-Gehalt beträgt 0.59 % Es wurde mit 40.95 g PUD-Salz kettenverlängert und nach einigen Minuten mit 300 g VE-Wasser verdünnt. Es wurde 80 g eines Reaktionsproduktes von 2 mol Acrylsäure an 1 mol Butandiolbisglycidylether (M=330g/mol) homogen eingerührt. Dann wurde mit 900 g VE-Wasser dispergiert. Das Aceton wird im Vakuum bei Temperaturen bis 40°C abdestilliert und der Feststoffgehalt auf 40 % eingestellt.

Analysenwerte: Feststoffgehalt: 40 % LD: 89.7 Visk.: 37.6 mPas pH: 7.5 K-Wert 57 Doppelbindungsgehalt: 0.6 mol/kg

Beispiel 3

Ein Teil der Dispersion wurde mit eine äquivalenten Menge Amin in Form eines Polyethylenimins Pn=20 als 25%ige Lösung versetzt. K-Wert: 55
Die Dispersion wurde bei 40°C verfilmt. K-Wert: ungelöst.

Beispiel 4 (V) (zum Vergleich)

585.3 g eines Polyesters aus Adipinsäure und Diethylenglykol (OHZ=42) wurden mit 0.5 g DBTL, 21.45 g DMPA, 72.3 g eines Adduktes von 2 mol Acrylsäure an 1 mol Butandiolbisglycidylether (M=330 g/mol) und 0.05 g Dimethylhydrochinon in 195.5 g Aceton bei 40°C vorgelegt . Es werden 120.9 g TDI zudosiert und 277 min bei 70°C umgesetzt. Dann wird mit 782 g Aceton verdünnt und auf 50°C abgekühlt, der NCO-Gehalt beträgt 0.55 %. Es wird mit 25.6 g 25%iger Natronlauge neutralisiert und mit 1200 g VE-Wasser dispergiert. Das Aceton wird im Vakuum bei Temperaturen bis 40°C abdestilliert und der Feststoffgehalt auf 40 % eingestellt.

Analysenwerte: Feststoffgehalt: 40 % LD: 73 Visk.: 70 mPas pH:8.6 K-Wert: 39 Doppelbindungsgehalt: 0.55 mol/ g

Beispiel 4

Ein Teil der Dispersion wurde mit einem Polyethylenimin Pn=20 als 25%ige Lösung versetzt.
Molares Verhältnis Doppelbindungen : Aminogruppen 2:1.
K-Wert: 43
Die Dispersion wurde bei 40°C verfilmt. K-Wert: ungelöst.

Beispiel 5 (V) (zum Vergleich)

465.2 g Polypropylenoxiddiol (OHZ=56) wurden mit 0.5 g DBTL, 21.4 g DMPA, 24.2 g Neopentylglykol und 129.2 g TDI 122 min bei 110°C umgesetzt. Dann wurde mit 782 g Aceton verdünnt und auf 50°C abgekühlt. Es wurde mit 4.5 g NaOH in 20 g VE-Wasser neutralisiert und 160 g eines Adduktes aus 2 mol Acrylsäure an 1 mol Bisphenol A-bisglycidylether (M=484) in 160 g Aceton homogen eingerührt. Dann wurde mit 1200 g VE-Wasser dispergiert. Das Aceton wurde im Vakuum bei Temperaturen bis 40°C abdestilliert und der Feststoffgehalt auf 40 % eingestellt.

Analysenwerte: Feststoffgehalt: 40 % LD: 97 Visk.: 417 mPas pH: 8.1 K-Wert: 43 Doppelbindungsgehalt: 0.83 mol/kg

Beispiel 5

Ein Teil der Dispersion wurde mit einer 25%igen Lösung eines Polyethylenimins Pn=20 versetzt. Es lagen äquimolare Mengen an Amin und Doppelbindungen vor.
K-Wert: 47

Beispiel 6 (V) (zum Vergleich)

400 g (0,2 mol) eines Polyesterols aus Adipinsäure, Neopentylglykol und Hexandiol der OH-Zahl 56, 21,4 g (0,16 mol) Dimethylolpropionsäure und 14,3 g (0,106 mol) Trimethylolpropan wurden gemischt. Dazu wurden 127,2 g (0,73 mol) Toluylendiisoxyanat gegeben und 90 min bei 100°C umgesetzt. Dann wurde auf 80°C gekühlt und 0,37 g Hydrochinonmonomethylether und 37,2 g (0,32 mol) Hydroxyethylacrylat zugegeben. Nach 120 min bei 80°C wurde mit 500 g Aceton verdünnt. Der NCO-Gehalt liegt bei 0,32 Gew.-% (ber. 0,38 %). Dann wurden 15,1 g (0,15 mol) Triethylamin eingemischt und durch Zugabe von 1200 g Wasser dispergiert. Anschließend wurde das Aceton i.V. abdestilliert. Man erhielt eine feinteilige Dispersion mit einem Festgehalt von 34,0 % und einem Gehalt an Doppelbindungen (DB) von 177 mmol/kg Dispersion.

Beispiel 6

200 g der PUR-Dispersion (35,2 mmol DB) werden mit 1,0 g Polymin G 10 (23,3 mmol NH) versetzt und mit 29 g Wasser auf 30 % Festgehalt eingestellt.

Beispiel 6a

200 g der PUR-Dispersion (35,2 mmol DB) werden mit 2,0 g Polymin G 10 (46,5 mmol NH) versetzt und mit 31,5 g Wasser auf 30 % Festgehalt eingestellt.

Beispiel 6b

200 g der PUR-Dispersion (35,2 mmol DB) werden mit 5,0 g Polymin G 10 (116,3 mmol NH) versetzt und mit 38,5 g Wasser auf 30 % Festgehalt eingestellt.

A Anwendungstechnische Prüfung als Klebstoff

Die Dispersionen werden mit 2 % Collacral VL verdickt und auf je 5 Hartfaserplatten (20 cm x 3 cm) 2mm dick aufgerakelt und 60 min bei RT oder 3 min bei 60°C getrocknet. Dann wird eine ASA-Folie oder PVC-Folie mit 0.5 N/mm2 30 s bei 80°C aufgepreßt.

Es wird über die Schälfestigkeit die Wärmestandfestigkeit bestimmt. Nach 24 h erfolgt die Prüfung der Wärmestandfestigkeit(WSF). Dazu wird die ASA-Folie oder PVC-Folie in einem Abschälwinkel von 180°C mit einem Gewicht von 300 g belastet. Die Temperatur wird alle 30 Minuten um 10°C erhöht. Als Wärmestandfestigkeit wird die höchste Temperatur angegeben, bei der die Ablaufstrecke gerade noch kleiner ist als 50 mm.

Die Prüfergebnisse sind in Tabelle 1 zusammengestellt

Tabelle 1

| Beispiel | WSF [°C] |
|---|---|
| 1* | 5 x 90 |
| 1 (V)* | 5 x 60 |
| 2** | 5 x > 120 |
| 2 (V)** | 5 x 90 |

* mit PVC-Folie, 60 min bei RT getrocknet

** mit ASA-Folie, 3 min bei 60°C getrocknet

B. Anwendungstechnische Prüfung als Lederbeschichtung

Die in Tabelle 2 genannten Dispersionen wurden als Appretur auf grundiertes Rindboxleder aufgetragen.

Die Prüfung der Dauerbiegefestigkeit wurde nach DIN 53 351/IuP (Methode der physikalischen Lederprüfung von der internationalen Union der Lederchemiker, Verbände) mit dem Bally-Flexometer durchgeführt).

Die Prüfung des Naßabriebs erfolgte mit dem Reibechtheitstester nach WESSLIC nach IUF 450 (International Union Fastness). Die Prüfung erfolgte nach den in der Tabelle angegebenen Lagerzeiten der beschichteten Leder.

Die Beurteilung erfolgte nach dem Umfang der Beschädigung O keine, g geringe, d deutliche s starke Beschädigung

Tabelle 2

| Beispiele | Flex. | Flex. | Naßabrieb | | |
|---|---|---|---|---|---|
| | trocken[1)] | naß[2)] | 1d[3)] | 5d[4)] | 5d[5)] |
| 6 (V) | - | - | - | - | - |
| 6 | O | O | 50 x g | 50 x g-1 | 50 x g-d |
| 6a | O | O | 100 x g-d | 50 x g-d | 50 x g-d |
| 6b | O | O | 50 x g-s | 50 x g-d | 50 x g-d |

1) nach 50 000 Knickungen
2) nach 20 000 Knickungen
3) nach 3 tägiger Lagerung bei RT
4) nach 5 tägiger Lagerung bei RT
5) nach 5 tägiger Lagerung bei RT und zusätzlich 1 stündiger Lagerung bei 80°C

Das mit der Dispersion gemäß Beispiel 6 (V) beschichtete Leder war zu klebrig, als daß es hätte geprüft werden können.

**Patentansprüche**

**1.** Latent vernetzende wässerige Polyurethandispersionen, enthaltend

I) eine disperse Phase (P.I), enthaltend

Ia) ein Polyurethan (PUR.Ia), das neben Gruppen, die die Wasserdispergierbarkeit des Polyurethans bewirken, Gruppen mit einer C-C-Doppelbindung, in denen die Doppelbindung durch eine daran direkt gebundene Carbonylgruppe aktiviert ist, trägt oder

Ib) eine Mischung aus

- einem Polyurethan (PUR.Ib), das Gruppen, die die Wasserdispergierbarkeit des Polyurethans bewirken, jedoch keine Gruppen mit einer C-C-Doppelbindung, in denen die Doppelbindung durch eine daran direkt gebundene Carbonylgruppe aktiviert ist, trägt und
- einer Verbindung (V.I) verschieden von den Polyurethanen PUR.Ia und PUR.Ib, die Gruppen mit einer C-C-Doppelbindung, in denen die Doppelbindung durch eine daran direkt gebundene Carbonylgruppe aktiviert ist, trägt und

II) eine Verbindung, die

- im Mittel mindestens 2 H-Atome, die als Aminofunktion vorliegen
- eine Wasserlöslichkeit von mehr als 1g/l (25°C) und
- zahlenmittleres Molgewicht ($M_n$) von 200 bis 1 000 000 aufweist (Verbindung II)

**2.** Wässerige Dispersionen nach Anspruch 1, wobei die Phase (P.I) ein Polyurethan (PUR.Ia), aufgebaut aus

a1) mehrwertigen Isocyanaten mit 4 bis 30 C-Atomen,

a2) Polyolen, von denen

a2.1) 10 bis 100 mol-%, bezogen auf die Gesamtmenge der Diole (a2), ein Molekulargewicht von 500 bis 5000 aufweisen, und

a2.2) 0 bis 90 mol-%, bezogen auf die Gesamtmenge der Diole (a2), ein Molekulargewicht von 60 bis 500

g/mol aufweisen,

a3) von den Monomeren (a1) und (a2) verschiedene Monomere mit wenigstens einer Isocyanatgruppe oder wenigstens einer gegenüber Isocyanatgruppen reaktiven Gruppe, die darüberhinaus wenigstens eine hydrophile Gruppen oder eine potentiell hydrophile Gruppe tragen, wodurch die Wasserdispergierbarkeit der Polyurethane bewirkt wird,

a4) von den Monomeren (a1), (a2) und (a3) verschiedene Monomere mit wenigstens einer Isocyanatgruppe oder wenigstens einer gegenüber Isocyanatgruppen reaktiven Gruppe, die darüberhinaus wenigstens eine Acryloyl- oder Methacryloylgruppe tragen und

a5) gegebenenfalls weiteren von den Monomeren (a2) bis (a4) verschiedenen mehrwertigen Verbindungen mit gegenüber Isocyanatgruppen reaktiven Gruppen, bei denen es sich um alkoholische Hydroxylgruppen oder primäre oder sekundäre Aminogruppen handelt

enthält.

**3.** Wässerige Dispersionen nach Anspruch 1 oder 2, wobei es sich bei der Phase (P.I) um eine Mischung aus

- einem Polyurethan (PUR.Ib) und
- einem Polyurethan (PUR.Ic) als Verbindung (V.I) handelt,

wobei das Polyurethan (PUR.Ib) aufgebaut ist aus

b1) mehrwertigen Isocyanaten mit 4 bis 30 C-Atomen,

b2) Polyolen, von denen

b2.1) 10 bis 100 mol-%, bezogen auf die Gesamtmenge der Diole (b2), ein Molekulargewicht von 500 bis 5000 aufweisen, und

b2.2) 0 bis 90 mol-%, bezogen auf die Gesamtmenge der Diole (b), ein Molekulargewicht von 60 bis 500 g/mol aufweisen,

b3) von den Monomeren (b1) und (b2) verschiedenen Monomeren mit wenigstens einer Isocyanatgruppe oder wenigstens einer gegenüber Isocyanatgruppen reaktiven Gruppe, die darüberhinaus wenigstens eine hydrophile Gruppen oder eine potentiell hydrophile Gruppe tragen, wodurch die Wasserdispergierbarkeit der Polyurethane bewirkt wird,

b4) gegebenenfalls weiteren von den Polyolen (b2) und Monomeren (b3) verschiedenen mehrwertigen Verbindungen mit gegenüber Isocyanaten reaktiven Gruppen, bei denen es sich um alkoholische Hydroxylgruppen oder primäre oder sekundäre Aminogruppen handelt,

und das Polyurethan (PUR.Ic) aufgebaut ist aus

c1) mehrwertigen Isocyanaten mit 4 bis 30 C-Atomen,

c2) Polyolen, von denen

c2.1) 10 bis 100 mol-%, bezogen auf die Gesamtmenge der Diole (c2), ein Molekulargewicht von 500 bis 5000 aufweisen, und

c2.2) 0 bis 90 mol-%, bezogen auf die Gesamtmenge der Diole (c2), ein Molekulargewicht von 60 bis 500 g/mol aufweisen,

c3) von den Monomeren (c1) und (c2) verschiedenen Monomeren mit wenigstens einer Isocyanatgruppe oder wenigstens einer gegenüber Isocyanatgruppen reaktiven Gruppe, die darüberhinaus wenigstens eine Acryloyl- oder Methacryloylgruppe tragen.

4. Wässerige Dispersionen nach den Ansprüchen 1 bis 3, wobei es sich bei dem Monomer (a4) bzw. (c3) um ein ($C_1$- bis $C_6$-Hydroxyalkyl)-acrylat, ein ($C_1$- bis $C_6$-Hydroxyalkyl)-methacrylat oder um das Bisaddukt von Acrylsäure und/oder Methacrylsäure an ein Bisepoxid handelt.

5. Wässerige Dispersionen nach den Ansprüchen 1 bis 4, wobei als Verbindung II ein verzweigtes oder unverzweigtes Polyethylenimin eingesetzt wird.

6. Wässerige Dispersionen nach den Ansprüchen 1 bis 5, wobei als Verbindung II ein Poly ($C_2$-bis $C_4$)-alkylenoxid mit $NH_2$-Gruppen an den Kettenenden eingesetzt wird.

7. Wässerige Dispersionen nach den Ansprüchen 1 bis 6, wobei das Molverhältnis der durch eine Carbonylgruppe aktivierten Doppelbindungen zu dem Wasserstoffatomen, die als Aminogruppe vorliegen, 0,1:1 bis 10:1 beträgt.

8. Latent vernetzende wässerige Polyurethandispersionen nach den Ansprüchen 1 bis 7, wobei es sich bei den Gruppen mit einer C-C-Doppelbindung, in denen die Doppelbindung durch eine daran direkt gebundene Carbonylgruppe aktiviert ist, die die Polyurethane PUR.Ia und PUR.Ic tragen, um eine Acryloylgruppe handelt.

9. Verwendung der Dispersionen nach den Ansprüchen 1 bis 8 als Beschichtungsmittel oder Klebstoff.

10. Gegenstände aus Holz, Metall, Textil, Leder oder Kunststoff, die mit einer wässerigen Dispersion nach den Ansprüchen 1 bis 8 verklebt, imprägniert oder beschichtet sind.

## Claims

1. An aqueous latent-crosslinking polyurethane dispersion, comprising

I) a disperse phase (P.I) including

Ia) a polyurethane (PUR.Ia) carrying not only groups which render the polyurethane dispersible in water but also groups with a C-C double bond which is activated by a carbonyl attached directly to it, or

Ib) a mixture of

- a polyurethane (PUR.Ib) carrying groups which render the polyurethane dispersible in water but no groups with a C-C double bond which is activated by carbonyl attached directly to it, and
- a compound(V.I)differentfrom the polyurethanes PUR.Ia and PUR.Ib, which carries groups with a C-C double bond which is activated by a carbonyl attached directly to it, and

II) a compound having

- on average at least 2 hydrogens present in the form of amino function,
- a solubility in water of more than 1g/l (25°C) and
- a number-average molecular weight ($M_n$) of from 200 to 1,000,000 (compound II).

2. An aqueous dispersion as claimed in claim 1, wherein the phase (P.I) comprises a polyurethane (PUR.Ia) composed of

a1) polyfunctional isocyanates of 4 to 30 carbons,

a2) polyols, of which

a2.1) from 10 to 100 mol-%, based on the overall amount of the diols (a2), have a molecular weight of

from 500 to 5000, and

a2.2) from 0 to 90 mol-%, based on the overall amount of the diols (a2), have a molecular weight of from 60 to 500 g/mol,

a3) monomers which are different from monomers (a1) and (a2) and have at least one isocyanate group or at least one isocyanato-reactive group and which, moreover, carry at least one hydrophilic group or potentially hydrophilic group, by means of which the polyurethanes are made dispersible in water,

a4) monomers which are different from monomers (a1), (a2) and (a3) and have at least one isocyanate group or at least one isocyanato-reactive group and which, moreover, carry at least one acryloyl and methacryloyl group, and

a5) if desired, further polyfunctional compounds which are different from the monomers (a2) to (a4) and have isocyanato-reactive groups which are alcoholic hydroxyl or primary or secondary amino groups.

**3.** An aqueous dispersion as claimed in claim 1 or 2, wherein the phase (P.I) is a mixture of

- a polyurethane (PUR.Ib) and
- a polyurethane (PUR.Ic) as compound (V.I),

the polyurethane (PUR.Ib) being composed of

b1) polyfunctional isocyanates of 4 to 30 carbons,

b2) polyols, of which

b2.1) from 10 to 100 mol-%, based on the overall amount of the diols (b2), have a molecular weight of from 500 to 5000, and

b2.2) from 0 to 90 mol-%, based on the overall amount of the diols (b2), have a molecular weight of from 60 to 500 g/mol,

b3) monomers which are different from monomers (b1) and (b2) and carry at least one isocyanate group or at least one isocyanato-reactive group, and which, moreover, carry at least one hydrophilic group or a potentially hydrophilic group, whereby the polyurethanes are made dispersible in water, and

b4) if desired, further polyfunctional compounds, different from the polyols (b2) and monomers (b3), having isocyanato-reactive groups which are alcoholic hydroxyls or primary or secondary aminos,

and the polyurethane (PUR.Ic) being composed of

c1) polyfunctional isocyanates of 4 to 30 carbons,

c2) polyols, of which

c2.1) from 10 to 100 mol-%, based on the overall amount of the diols (c2), have a molecular weight of from 500 to 5000, and

c2.2) from 0 to 90 mol-%, based on the overall amount of the diols (c2), have a molecular weight of from 60 to 500 g/mol,

c3) monomers which are different from monomers (c1) and (c2) and have at least one isocyanate group or at least one isocyanato-reactive group and which, moreover, carry at least one acryloyl or methacryloyl group.

**4.** An aqueous dispersion as claimed in any of claims 1 to 3, wherein the monomer (a4) or (c3) is a $C_1$-$C_6$-hydroxyalkyl acrylate, a $C_1$-$C_6$ hydroxyalkyl methacrylate or a bisadduct of acrylic acid and/or methacrylic acid with a bisepoxide.

**5.** An aqueous dispersion as claimed in any of claims 1 to 4, wherein a branched or unbranched polyethyleneimine is employed as compound II.

**6.** An aqueous dispersion as claimed in any of claims 1 to 5, wherein a poly-$C_2$-$C_4$-alkylene oxide with $NH_2$ groups at the chain ends is employed as compound II.

**7.** An aqueous dispersion as claimed in any of claims 1 to 6, wherein the molar ratio of the double bonds activated by carbonyl to the hydrogens present in amino form is from 0.1:1 to 10:1.

**8.** An aqueous latent-crosslinking polyurethane dispersion as claimed in any of claims 1 to 7, wherein the groups with a C-C double bond activated by carbonyl attached directly to it, as carried by the polyurethanes PUR.Ia and PUR.Ic, are acryloyl.

**9.** The use of a dispersion as claimed in any of claims 1 to 8 as a coating composition or adhesive.

**10.** An article of wood, metal, textile, leather or plastic which is coated, impregnated or bonded with an aqueous dispersion as claimed in any of claims 1 to 8.

**Revendications**

**1.** Dispersion aqueuse de polyuréthane à réticulation latente, contenant

I) une phase dispersée (P.I), contenant

Ia)un polyuréthane (PUR.Ia) qui porte, en plus des groupements permettant la dispersabilité du polyuréthane dans l'eau, des groupements ayant une double liaison C-C, dans lesquels la double liaison est activée par un groupement carbonyle qui lui est directement lié, ou
Ib) un mélange constitué de

- un polyuréthane (PUR.Ib) qui porte des groupements permettant la dispersabilité du polyuréthane dans l'eau, mais pas de groupements ayant une double liaison C-C, dans lesquels la double liaison est activée par un groupement carbonyle qui lui est directement lié, et
- un composé (V.I) différents des polyuréthanes PUR.Ia et PUR.Ib, qui porte des groupements ayant une double liaison C-C, dans lesquels la double liaison est activée par un groupement carbonyle qui lui est directement lié, et

II) un composé qui présente

- en moyenne au moins 2 atomes de H sous forme de fonctions amino,
- une solubilité dans l'eau de plus de 1 g/l (25°C) et
- une masse moléculaire en nombre ($M_n$) de 200-1 000 000 (composé II).

**2.** Dispersions aqueuses selon la revendication 1, où la phase (P.I) contient un polyuréthane (PUR.Ia) construit à partir

a1) d'isocyanates polyfonctionnels ayant 4-30 atomes de C,
a2) de polyols parmi lesquels

a2.1) 10-100% en moles, par rapport à la quantité totale des diols (a2), présentent une masse moléculaire de 500-5000, et
a2.2) 0-90% en moles, par rapport à la quantité totale des diols (a2), présentent une masse moléculaire de 60-500 g/mol,

a3) de monomères différents des monomères (a1) et (a2), et ayant au moins un groupement isocyanate ou au moins un groupement réactif vis-à-vis des groupements isocyanates, portant en outre au moins un groupement hydrophile ou un groupement potentiellement hydrophile, par lequel la dispersabilité dans l'eau du polyuréthane est assurée,
a4) de monomères différents des monomères (a1), (a2) et (a3) et ayant au moins un groupement isocyanate

ou au moins un groupement réactif vis-à-vis des groupements isocyanates, portant en outre au moins un groupement acryloyle ou méthacryloyle et

a5) éventuellement d'autres composés polyfonctionnels différents des monomères (a2) à (a4), et ayant des groupements réactifs vis-à-vis des groupements isocyanates, qui sont des groupements hydroxy alcooliques ou des groupements amino primaires ou secondaires.

**3.** Dispersions aqueuses selon la revendication 1 ou 2, où la phase (P.I) est un mélange constitué

- d'un polyuréthane (PUR.lb) et
- d'un polyuréthane (PUR.lc) en tant que composé (V.I),

où le polyuréthane (PUR.lb) est construit à partir

b1) d'isocyanates polyfonctionnels ayant 4-30 atomes de C,

b2) de polyols parmi lesquels

b2.1) 10-100% en moles, par rapport à la quantité totale des diols (b2), présentent une masse moléculaire de 500-5000, et

b2.2) 0-90% en moles, par rapport à la quantité totale des diols (b2), présentent une masse moléculaire de 60-500 g/mol,

b3) de monomères différents des monomères (b1) et (b2), et ayant au moins un groupement isocyanate ou au moins un groupement réactif vis-à-vis des groupements isocyanates, portant en outre au moins un groupement hydrophile ou un groupement potentiellement hydrophile, par lequel la dispersabilité dans l'eau du polyuréthane est assurée,

b4) éventuellement d'autres composés polyfonctionnels différents des polyols (b2) et des monomères (b3), et ayant des groupements réactifs vis-à-vis des groupements isocyanates, qui sont des groupements hydroxy alcooliques ou des groupements amino primaires ou secondaires,

et le polyuréthane (PUR.lc) est construit à partir

c1) d'isocyanates polyfonctionnels ayant 4-30 atomes de C,

c2) de polyols parmi lesquels

c2.1) 10-100% en moles, par rapport à la quantité totale des diols (c2), présentent une masse moléculaire de 500-5000, et

c2.2) 0-90% en moles, par rapport à la quantité totale des diols (c2), présentent une masse moléculaire de 60-500 g/mol,

c3) de monomères différents des monomères (c1) et (c2) et ayant au moins un groupement isocyanate ou au moins un groupement réactif vis-à-vis des groupements isocyanates, portant en outre au moins un groupement acryloyle ou méthacryloyle.

**4.** Dispersions aqueuses selon l'une quelconque des revendications 1 à 3, où le monomère (a4) respectivement (c3) est un acrylate d'hydroxy(alkyle en $C_1$-$C_6$), un méthacrylate d'hydroxy(alkyle en $C_1$-$C_6$) ou le bisadduit de l'acide acrylique et/ou de l'acide méthacrylique sur un bisépoxyde.

**5.** Dispersions aqueuses selon l'une quelconque des revendications 1 à 4, où on utilise un polyéthylène-imine linéaire ou ramifié en tant que composé II.

**6.** Dispersions aqueuses selon l'une quelconque des revendications 1 à 5, où on utilise un poly(oxyde d'alkylène en $C_2$-$C_4$) ayant des groupements $NH_2$ en fins de chaîne en tant que composé II.

**7.** Dispersions aqueuses selon l'une quelconque des revendications 1 à 6, où le rapport molaire des doubles liaisons activées par un groupement carbonyle aux atomes d'hydrogène présents en tant que groupements amino s'élève de 0,1:1 à 10:1.

**8.** Dispersion aqueuse de polyuréthane à réticulation latente selon l'une quelconque des revendications 1 à 7, où

les groupements ayant une double liaison C-C, dans lesquels la double liaison est activée par un groupement carbonyle qui lui est directement lié, portés par les polyuréthanes PUR.Ia et PUR.Ic sont des groupements acryloyle.

**9.** Utilisation des dispersions selon l'une quelconque des revendications 1 à 8 en tant qu'agent de revêtement ou colle.

**10.** Objets en bois, métal, textile, cuir ou matière plastique qui ont été collés, imprégnés ou revêtus d'une dispersion aqueuse selon l'une quelconque des revendications 1 à 8.